# EUROPÄISCHE PATENTANMELDUNG

(11) **EP 4 245 195 A1**
(43) Veröffentlichungstag der Anmeldung: **20.09.2023**
(21) Anmeldenummer: 23157730.5
(22) Anmeldetag: 21.02.2023
(51) Int. Cl.: A47J 43/07, A47J 36/16

(54) **GARGESCHIRRVORRICHTUNG**

(30) Priorität: 15.03.2022 EP 22382245
(71) Anmelder: BSH Hausgeräte GmbH, 81739 München (DE)
(72) Erfinder: De Ena Wolf, Santiago Miguel, 50016 Zaragoza (ES); Parra Borderías, Maria, 50006 Zaragoza (ES); Ceamanos Gaya, Jesus, 50016 Zaragoza (ES); Albero Mena, Maria Carmen, 50002 Zaragoza (ES); Villanueva Valero, Beatriz, 50011 Zaragoza (ES); Franco Gutierrez, Carlos, 50017 Zaragoza (ES); Casion Ballester, Carlos, 50005 Zaragoza (ES)

(57) **Zusammenfassung**

Die Erfindung geht aus von einer Gargeschirrvorrichtung (10a; 10b) für zumindest ein Gargeschirr (12a; 12b), welches einen über eine Zugangsöffnung (14a; 14b) zugänglichen Lebensmittelaufnahmeraum (16a; 16b) aufweist, mit zumindest einer Rühreinheit (18a; 18b), welche zumindest ein Rührelement (20a; 20b) umfasst, mit einer Antriebseinheit (22a; 22b) zum Antrieb des Rührelements (20a; 20b) innerhalb des Lebensmittelaufnahmeraums (16a; 16b) und mit einer Befestigungseinheit (24a; 24b) zur lösbaren Befestigung an dem Gargeschirr (12a; 12b).

Um eine Benutzerfreundlichkeit zu verbessern, wird vorgeschlagen, dass die Antriebseinheit (22a; 22b) in einem montierten Zustand außerhalb eines Dampfaustrittsbereichs (26a; 26b) des Lebensmittelaufnahmeraums (16a; 16b) angeordnet ist.

## Beschreibung

Die Erfindung betrifft eine Gargeschirrvorrichtung nach dem Oberbegriff des Anspruchs 1 und ein Gargeschirr nach Anspruch 12.

Aus dem Stand der Technik sind bereits Gargeschirrvorrichtungen für zumindest ein Gargeschirr bekannt, welche eine Rühreinheit mit zumindest einem Rührelement, eine Antriebseinheit zum Antrieb der Rühreinheit und eine Befestigungseinheit zur lösbaren Befestigung aufweisen. Nachteilig bei bisher bekannten Gargeschirrvorrichtungen ist, dass die Antriebseinheit und weitere elektrische und/oder elektronische Komponenten aufgrund ihrer Anordnung den beim Kochen entstehenden Dämpfen ausgesetzt sind. Hierdurch ergibt sich ein erhöhter Verschleiß dieser Komponenten, wodurch eine gewünschte Langlebigkeit nicht erreicht werden kann. Ferner ergeben sich durch die Anordnung der Antriebseinheit und/weiterer elektrischer und/oder elektronischer Komponenten in einem Dampfaustrittsbereich nachteilig Gefahren für einen Benutzer, beispielsweise die Gefahr eines Verbrühens beim Bedienen der Gargeschirrvorrichtung. Eine Benutzerfreundlichkeit derartiger Gargeschirrvorrichtungen ist daher nachteilig stark eingeschränkt.

Die Aufgabe der Erfindung besteht insbesondere, aber nicht beschränkt darauf, darin, eine gattungsgemäße Vorrichtung mit verbesserten Eigenschaften hinsichtlich einer Benutzerfreundlichkeit bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Gargeschirrvorrichtung für zumindest ein Gargeschirr, welches einen über eine Zugangsöffnung zugänglichen Lebensmittelaufnahmeraum aufweist, mit zumindest einer Rühreinheit, welche zumindest ein Rührelement umfasst, mit einer Antriebseinheit zum Antrieb des Rührelements innerhalb des Lebensmittelaufnahmeraums und mit einer Befestigungseinheit zur lösbaren Befestigung an dem Gargeschirr.

Es wird vorgeschlagen, dass die Antriebseinheit in einem montierten Zustand außerhalb eines Dampfaustrittsbereichs des Lebensmittelaufnahmeraums angeordnet ist.

Durch eine derartige Ausgestaltung kann vorteilhaft eine Gargeschirrvorrichtung mit verbesserten Eigenschaften hinsichtlich einer Benutzerfreundlichkeit bereitgestellt werden. Indem die Antriebseinheit und insbesondere weitere elektrische und/oder elektronische Komponenten der Gargeschirrvorrichtung, beispielsweise eine Steuereinheit und/oder eine Bedieneinheit, in dem montierten Zustand außerhalb des Dampfaustrittsbereichs des Lebensmittelaufnahmeraums angeordnet ist/sind, kann vorteilhaft ein verbesserter Schutz dieser Komponente/n erreicht und somit eine besonders zuverlässige und langlebige Gargeschirrvorrichtung bereitgestellt werden. Ferner kann vorteilhaft auch ein verbesserter Schutz für Benutzer erreicht werden, indem durch die Anordnung außerhalb des Dampfaustrittsbereichs Gefahren, beispielsweise ein Verbrühen beim Bedienen der Gargeschirrvorrichtung, reduziert werden können. Zudem kann vorteilhaft eine Gargeschirrvorrichtung mit einem besonders hohen Bedienkomfort bereitgestellt werden.

Unter einer "Gargeschirrvorrichtung" soll zumindest ein Teil, insbesondere eine Unterbaugruppe, des Gargeschirrs und/oder zumindest ein Zubehörteil für das Gargeschirr verstanden werden. Beispielsweise könnte das Gargeschirr, insbesondere in einem Fall, in welchem die Gargeschirrvorrichtung Teil des Gargeschirrs ist, die Gargeschirrvorrichtung aufweisen. Alternativ oder zusätzlich könnte die Gargeschirrvorrichtung als Zubehör des Gargeschirrs ausgebildet und zu einem Gebrauch mit dem Gargeschirr vorgesehen sein.

Unter der Wendung Gargeschirrvorrichtung "für" zumindest ein Gargeschirr soll verstanden werden, dass die Gargeschirrvorrichtung speziell für das Gargeschirr vorgesehen ist und/oder dass die Gargeschirrvorrichtung speziell auf das Gargeschirr zugeschnitten ist. Grundsätzlich kann die Gargeschirrvorrichtung jedoch für verschiedene Gargeschirre, insbesondere für verschiedene Gargeschirre mit gleichem Durchmesser, vorgesehen sein.

Unter einem "Gargeschirr" soll eine Einheit verstanden werden, welche einen Lebensmittelaufnahmeraum wenigstens teilweise definiert und/oder begrenzt und welche zu einer Beheizung, insbesondere durch zumindest eine Heizeinheit, insbesondere zumindest eines Garsystems und/oder zumindest eines Gargeräts, vorgesehen ist und welche dazu vorgesehen ist, mittels durch die Beheizung aufgenommener Energie zumindest ein in dem Lebensmittelaufnahmeraum angeordnetes Lebensmittel zu erhitzen und/oder zu garen und/oder warmzuhalten. Beispielsweise könnte das Gargeschirr zu einem Einbringen in zumindest einen Garraum, insbesondere eines als Ofen ausgebildeten Gargeräts, vorgesehen sein. Vorzugsweise ist das Gargeschirr zu einem Aufstellen auf zumindest einer Aufstellplatte, beispielsweise einer Kochfeldplatte, zum Zweck einer Beheizung, vorgesehen. Das Gargeschirr könnte beispielsweise als ein Topf und/oder als eine Pfanne und/oder als ein Backblech ausgebildet sein. Das Gargeschirr weist einen Gargeschirrboden und zumindest eine mit dem Gargeschirrboden verbundene Gargeschirrwandung auf, welche den Lebensmittelaufnahmeraum wenigstens teilweise definieren und begrenzen. Das Gargeschirr weist eine Zugangsöffnung auf, über welche der Lebensmittelaufnahmeraum zugänglich ist. Die Zugangsöffnung ist zu einer Zufuhr von Lebensmitteln in dem Lebensmittelaufnahmeraum sowie zu einer Entnahme von Lebensmitteln aus dem Lebensmittelaufnahmeraum vorgesehen. Vorzugsweise wird die Zugangsöffnung durch eine Kante der Gargeschirrwandung, welche zu dem Gargeschirrboden maximal beabstandet ist, begrenzt. Vorzugsweise ist die Zugangsöffnung parallel zu dem Gargeschirrboden ausgerichtet.

Die Rühreinheit ist dazu vorgesehen, in einem Betriebszustand der Gargeschirrvorrichtung zumindest ein Lebensmittel in dem Lebensmittelaufnahmeraum in eine Bewegung relativ zu dem Lebensmittelaufnahmeraum zu versetzen, insbesondere das Lebensmittel umzurühren und/oder zu verrühren und/oder zu mixen und/oder zu verquirlen und/oder aufzulockern und/oder dergleichen. Die Rühreinheit umfasst zumindest ein Rührelement und kann darüber hinaus weitere Rührelemente aufweisen. Unter einem "Rührelement" soll dabei ein Element der Rühreinheit verstanden werden, welches dazu vorgesehen ist, zumindest ein in dem Lebensmittelaufnahmeraum befindliches Lebensmittel in eine Bewegung relativ zu dem Lebensmittelaufnahmeraum zu versetzen, insbesondere das Lebensmittel umzurühren und/oder zu verrühren und/oder zu mixen und/oder zu verquirlen und/oder aufzulockern und/oder dergleichen. Das Rührelement ist in dem Betriebszustand bevorzugt zumindest teilweise in dem Lebensmittelraum und wenigstens abschnittsweise in Kontakt mit dem Lebensmittel angeordnet.

Die Befestigungseinheit ist zu der lösbaren Befestigung der Gargeschirrvorrichtung an dem Gargeschirr vorgesehen. Zu der lösbaren Befestigung an dem Gargeschirr weist die Befestigungseinheit zumindest ein Befestigungselement auf. Das Befestigungselement ist zum Herstellen einer lösbaren Verbindung mit der Gargeschirrwandung vorgesehen. Die Befestigungseinheit kann mehrere Befestigungselemente aufweisen, welche zum Herstellen der lösbaren Befestigung miteinander zusammenwirken und welche beispielsweise zum Herstellen einer lösbaren Verbindung mit verschiedenen Bereichen der Gargeschirrwandung vorgesehen sein können. Das Befestigungselement kann als ein magnetisches Befestigungselement ausgebildet sein und zur Herstellung einer lösbaren magnetischen Verbindung mit der Gargeschirrwandung vorgesehen sein. Alternativ oder zusätzlich kann das Befestigungselement zur Herstellung einer form- und/oder kraftschlüssigen Verbindung mit der Gargeschirrwandung vorgesehen sein und beispielsweise als ein Spannelement ausgebildet sein.

Unter einem "montierten Zustand" soll ein Zustand verstanden werden, in welchem die Gargeschirrvorrichtung, mittels der Befestigungseinheit, lösbar an dem Gargeschirr befestigt ist.

Unter einer "Antriebseinheit" soll eine Einheit verstanden werden, welche dazu vorgesehen ist, zumindest ein Antriebsmoment und/oder zumindest eine Antriebskraft zum Antrieb des Rührelements der Rühreinheit bereitzustellen. Vorzugsweise weist die Antriebseinheit zum Antrieb des Rührelements der Rühreinheit zumindest einen Antriebsmotor auf, welcher in einem Betriebszustand der Gargeschirrvorrichtung das Antriebsmoment und/oder die Antriebskraft bereitstellt und welcher beispielsweise als ein Gleichstrom-Elektromotor ausgebildet sein könnte.

Unter einem "Dampfaustrittsbereich" des Lebensmittelaufnahmeraums soll ein räumlicher Bereich verstanden werden, über welchen zumindest ein Großteil, insbesondere zumindest 70 %, vorteilhaft zumindest 75 %, besonders vorteilhaft zumindest 80 %, vorzugsweise zumindest 85 %, bevorzugt zumindest 90 % und besonders bevorzugt zumindest 95 %, in dem Betriebszustand entstehender Lebensmitteldämpfe, beispielsweise Wasserdampf, aus dem Lebensmittelaufnahmeraum in die Umgebung austreten können. Vorzugsweise weist der Dampfaustrittsbereich die Form eines gedachten allgemeinen Zylinders auf, dessen Grundfläche durch eine ebene, in sich geschlossene Kurve, begrenzt ist, welche die Zugangsöffnung des Gargeschirrs gerade noch vollständig umschließt, und dessen Höhe sich senkrecht zu der Grundfläche in einer dem Lebensmittelraum abgewandten Richtung erstreckt. Der Dampfaustrittsbereich kann beispielsweise die Form eines gedachten Kreiszylinders aufweisen, wenn das Gargeschirr eine kreisförmige Zugangsöffnung aufweist. Im Falle eines Gargeschirrs, welche eine Zugangsöffnung aufweist, deren Form von der Form einer Kreisfläche abweicht und beispielsweise oval oder rechteckig und/oder quadratisch oder dreieckig oder in anderer Art und Weise von einer Kreisform abweichend ausgebildet ist, weist der Dampfaustrittsbereich die Form eines entsprechenden gedachten allgemeinen Zylinders, mit einer der Form der Zugangsöffnung entsprechenden Grundfläche, beispielsweise die Form eines gedachten elliptischen Zylinders oder eines gedachten Prismas oder dergleichen, auf.

Die Gargeschirrvorrichtung kann neben der Rühreinheit, der Antriebseinheit und der Befestigungseinheit, weitere Einheiten aufweisen. Beispielsweise kann die Gargeschirrvorrichtung eine Bedieneinheit zur Auswahl und Einstellung von Funktionen der Rühreinheit durch einen Benutzer aufweisen. Die Bedieneinheit kann beispielsweise als Touch-Screen ausgebildet sein. Vorzugsweise ist die Bedieneinheit in dem montierten Zustand außerhalb des Dampfaustrittsbereichs angeordnet.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "zumindest im Wesentlichen" soll in diesem Dokument verstanden werden, dass eine Abweichung von einem vorgegebenen Wert weniger als 25%, vorzugsweise weniger als 10% und besonders bevorzugt weniger als 5% des vorgegebenen Werts abweicht.

Unter "vorgesehen" soll speziell programmiert und/oder ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Antriebseinheit bezüglich einer Höhenrichtung neben einer Gargeschirrwandung des Gargeschirrs anordenbar ist. Hierdurch kann vorteilhaft eine verbesserte Stabilität erreicht werden. Zudem kann vorteilhaft ein Schutz der Antriebseinheit vor Verschleiß und/oder Beschädigung durch während eines Betriebs entstehender Dämpfe, beispielsweise Wasserdampf, weiter verbessert werden. Vorzugsweise ist die Antriebseinheit in dem montierten Zustand bezüglich der Höhenrichtung neben der Gargeschirrwandung des Gargeschirrs angeordnet. Unter einer "Höhenrichtung" soll in diesem Dokument eine Richtung verstanden werden, welche in einem Zustand, in welchem das Gargeschirr auf den Gargeschirrboden aufgestellt ist, senkrecht zu einer Haupterstreckungsrichtung des Gargeschirrbodens nach oben verläuft. Unter einer "Haupterstreckungsrichtung" eines Objekts soll in dem vorliegenden Dokument eine Richtung verstanden werden, welche parallel zu einer längsten Kante eines kleinsten geometrischen Quaders verläuft, welcher das Objekt gerade noch vollständig umschließt.

Die Gargeschirrvorrichtung könnte eine Übertragungseinheit aufweisen, welche die Antriebseinheit mit der in dem montierten Zustand innerhalb des Dampfaustrittsbereichs angeordneten Rühreinheit verbindet und welche zur Übertragung eines Antriebsmoments von der Antriebseinheit auf die Rühreinheit ein Getriebe aufweist, welches als ein Kurbelgetriebe oder als ein Kurvengetriebe oder als ein Rädergetriebe, insbesondere als ein Zahnrad- und/oder Reibradgetriebe, ausgebildet ist. In einer besonders vorteilhaften Ausgestaltung wird jedoch vorgeschlagen, dass die Gargeschirrvorrichtung eine Übertragungseinheit aufweist, welche die Antriebseinheit mit der in dem montierten Zustand innerhalb des Dampfaustrittsbereichs angeordneten Rühreinheit verbindet und welche zur Übertragung eines Antriebsmoments von der Antriebseinheit auf die Rühreinheit einen Zugmitteltrieb aufweist. Durch eine derartige Ausgestaltung kann vorteilhaft eine Benutzerfreundlichkeit weiter verbessert werden. Es kann insbesondere eine Geräuschemission bei der Übertragung des Antriebsmoments vorteilhaft reduziert werden, wenn die Übertragungseinheit zur Übertragung des Antriebsmoments von der Antriebseinheit auf die Rühreinheit einen Zugmitteltrieb aufweist. Ferner kann durch den Einsatz eines Zugmitteltriebs eine Übertragung des Antriebsmoments vorteilhaft mit besonders einfachen technischen Mitteln realisiert werden. Insbesondere im Vergleich zu Rädergetrieben kann vorteilhaft eine Anzahl von erforderlichen Bauteilen zur Übertragung des Antriebsmoments und somit ein Material- und Fertigungsaufwand reduziert werden, wenn die Übertragungseinheit zur Übertragung des Antriebsmoments von der Antriebseinheit auf die Rühreinheit einen Zugmitteltrieb aufweist.

Der Zugmitteltrieb könnte als ein formschlüssiger Zugmitteltrieb, beispielsweise als ein Kettentrieb oder als ein Zahnriementrieb, ausgebildet sein. In einer besonders vorteilhaften Ausgestaltung wird jedoch vorgeschlagen, dass der Zugmitteltrieb als ein kraftschlüssiger Zugmitteltrieb, insbesondere als ein Riementrieb, ausgebildet ist. Hierdurch kann vorteilhaft eine Benutzerfreundlichkeit noch weiter verbessert werden. Im Falle eines kraftschlüssigen Zugmitteltriebs kann insbesondere eine Geräuschemission bei der Übertragung des Antriebsmoments gegenüber formschlüssigen Zugmitteltrieben vorteilhaft noch weiter verringert werden. Ferner kann vorteilhaft ein Herstellungs- und/oder Montageaufwand weiter reduziert werden.

Zudem wird vorgeschlagen, dass die Gargeschirrvorrichtung eine Positionierungseinheit aufweist, mittels derer die Rühreinheit in dem montierten Zustand in zumindest zwei Positionen relativ zur Antriebseinheit positionierbar ist. Vorzugsweise ist das Rührelement der Rühreinheit mittels der Positionierungseinheit in dem montierten Zustand in einer ersten Position innerhalb des Lebensmittelaufnahmeraums und in einer zweiten Position außerhalb des Lebensmittelaufnahmeraums positionierbar. Vorzugsweise ist die Rühreinheit mittels der Positionierungseinheit zwischen der ersten Position und der zweiten Position um eine Schwenkachse schwenkbar. Vorzugsweise ist eine Rührwelle der Rühreinheit in dem montierten Zustand in der ersten Position zumindest im Wesentlichen parallel zu der Gargeschirrwandung des Gargeschirrs ausgerichtet und bezüglich der Höhenrichtung zumindest teilweise neben der Antriebseinheit positioniert, wobei die Rührwelle in Höhenrichtung über die Antriebseinheit hinausragen kann. Vorzugsweise ist die Rührwelle in dem montierten Zustand in der zweiten Position bezüglich der Höhenrichtung oberhalb der Antriebseinheit positioniert und zumindest im Wesentlichen senkrecht zu der Gargeschirrwandung des Gargeschirrs ausgerichtet. Die Positionierungseinheit weist zumindest ein Positionierungselement, beispielsweise ein Gelenk oder dergleichen, auf. Vorzugsweise weist die Positionierungseinheit zumindest ein Feststellelement auf, mittels dessen die Rühreinheit relativ zu der Antriebseinheit in zumindest einer eingestellten Position, insbesondere der ersten Position und/oder der zweiten Position, feststellbar ist. Das Feststellelement kann beispielsweise als ein Rastelement oder dergleichen ausgebildet sein. Durch eine derartige Ausgestaltung kann vorteilhaft ein Bedienkomfort weiter verbessert werden. Insbesondere kann in dem montierten Zustand eine schnelle und flexible Anpassung an verschiedene Anwendungssituationen ermöglicht werden. Beispielsweise kann die Rühreinheit in der ersten Position in einem Rührmodus betrieben werden und in der zweiten Position in einen Standby-Modus versetzt werden, wobei die Zugangsöffnung des Gargeschirrs in der zweiten Position, beispielsweise zur Zugabe weiterer Zutaten bei der Lebensmittelzubereitung, frei zugänglich ist.

In einer weiteren vorteilhaften Ausgestaltung wird vorgeschlagen, dass eine Rührwelle der Rühreinheit mittels der Positionierungseinheit in einem zentralen Bereich des Lebensmittelaufnahmeraums positionierbar ist. Durch eine derartige Ausgestaltung kann vorteilhaft eine Benutzerfreundlichkeit weiter verbessert werden. Es kann insbesondere eine Stabilität verbessert werden, wenn die Rührwelle der Rühreinheit mittels der Positionierungseinheit in einem zentralen Bereich des Lebensmittelaufnahmeraums positionierbar ist. Es kann somit vorteilhaft ein besonders sicherer und zuverlässiger Rührvorgang ermöglicht werden. Unter einem "zentralen Bereich" des Lebensmittelaufnahmeraums soll ein räumlicher Bereich verstanden werden, welcher sich ausgehend von einem geometrischen Mittelpunkt des Gargeschirrbodens über die gesamte Höhe des Lebensmittelaufnahmeraums erstreckt und dessen Durchmesser zumindest 5 % und höchstens 50 % eines Durchmessers des Gargeschirrs entspricht.

Des Weiteren wird vorgeschlagen, dass die Befestigungseinheit zumindest ein Befestigungselement aufweist, welches zur Herstellung einer form- und/oder kraftschlüssigen Verbindung mit einer Gargeschirrwandung des Gargeschirrs vorgesehen ist. Durch eine derartige Ausgestaltung kann vorteilhaft eine besonders einfache, schnelle und sichere, lösbare Befestigung an dem Gargeschirr ermöglicht werden. Es können somit ein Bedienkomfort und eine Benutzerfreundlichkeit weiter verbessert werden. Zudem kann mittels eines Befestigungselements, welches zur Herstellung einer form- und/oder kraftschlüssigen Verbindung mit der Gargeschirrwandung des Gargeschirrs vorgesehen ist, unabhängig von dem Material der Gargeschirrwandung eine einfache und sichere Befestigung ermöglicht werden. Es kann somit auch eine Flexibilität im Hinblick auf einen möglichen Einsatz der Gargeschirrvorrichtung mit verschiedenen Gargeschirren erhöht werden.

Ferner wird vorgeschlagen, dass die Gargeschirrvorrichtung einen in dem montierten Zustand außerhalb des Dampfaustrittsbereichs angeordneten Energiespeicher zur netzunabhängigen Energieversorgung der Antriebseinheit aufweist. Hierdurch können vorteilhaft ein Bedienkomfort und eine Benutzerfreundlichkeit noch weiter verbessert werden. Unter einem "Energiespeicher" soll eine Einheit verstanden werden, welche dazu vorgesehen ist Energie, insbesondere chemische und/oder vorzugsweise elektrische Energie aufzunehmen, zu speichern und zur Versorgung der Antriebseinheit und/oder weiterer Einheiten der Gargeschirrvorrichtung wieder abzugeben. Der Energiespeicher könnte beispielsweise als ein elektrochemischer Kondensator und/oder als eine Brennstoffzelle ausgebildet sein. Vorzugsweise ist der Energiespeicher als ein Batteriespeicher, bevorzugt als ein wiederaufladbarer Batteriespeicher, insbesondere als ein Akkumulator, beispielsweise als ein Nickel-Cadmium-Akkumulator und/oder als ein Nickel-Metallhydrid-Akkumulator und vorzugsweise als ein Lithium-Ionen-Akkumulator, ausgebildet.

Zudem wird vorgeschlagen, dass die Gargeschirrvorrichtung eine Sensoreinheit zur Erfassung zumindest eines aktuellen Zustandsparameters des Gargeschirrs aufweist. Durch eine derartige Ausgestaltung kann vorteilhaft ein Bedienkomfort weiter verbessert werden. Bei dem aktuellen Zustandsparameter des Gargeschirrs kann es sich, ohne darauf beschränkt zu sein, beispielsweise um eine aktuelle Temperatur in dem Lebensmittelaufnahmeraum und/oder um ein Gewicht und/oder eine aktuelle Füllhöhe von Lebensmitteln in dem Lebensmittelaufnahmeraum und/oder um einen Aggregatszustand der Lebensmittel, beispielsweise um einen Feststoffanteil und einen Flüssigkeitsanteil und/oder eine Viskosität der Lebensmittel, und/oder um einen Wassergehalt von in dem Lebensmittelaufnahmeraum entstehenden Dämpfen und/oder um eine Bewegungsgeschwindigkeit von in dem Lebensmittelaufnahmeraum befindlichen Lebensmitteln relativ zu dem Lebensmittelaufnahmeraum und/oder um einen anderen, einem Fachmann als sinnvoll erscheinenden den Lebensmittelaufnahmeraum betreffenden Parameter handeln. Die Sensoreinheit umfasst zu der Erfassung des aktuellen Zustandsparameters zumindest ein Sensorelement. Das Sensorelement ist zur Erfassung des aktuellen Zustandsparameters dazu vorgesehen, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensorelemente, beispielsweise mechanische und/oder thermoelektrische und/oder resistive und/oder piezoelektrische und/oder kapazitive und/oder induktive und/oder optische und/oder akustische und/oder magnetische Sensorelemente, denkbar.

Die Sensoreinheit kann dazu vorgesehen sein, mehrere aktuelle Zustandsparameter des Gargeschirrs zeitgleich oder zeitlich zueinander versetzt zu erfassen. Hierzu kann die Sensoreinheit mehrere verschiedene Sensorelemente und/oder ein Multifunktionssensorelement aufweisen. Beispielsweise könnte die Sensoreinheit zumindest ein als Temperatursensor ausgebildetes erstes Sensorelement und zumindest ein als Füllstandsensor ausgebildetes zweites Sensorelement aufweisen.

Ferner wird vorgeschlagen, dass die Gargeschirrvorrichtung eine Steuereinheit zur Steuerung der Antriebseinheit aufweist. Durch eine derartige Ausgestaltung kann vorteilhaft eine Benutzerfreundlichkeit weiter verbessert werden. Unter einer "Steuereinheit" soll eine elektronische Einheit verstanden werden, die dazu vorgesehen ist, zumindest die Antriebseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit kann zusätzlich zur Steuerung der Antriebseinheit auch dazu vorgesehen sein, weitere Einheiten der Gargeschirrvorrichtung, beispielsweise die Sensoreinheit und/oder eine Benutzerschnittstelle, zu steuern und/oder zu regeln. Vorzugsweise ist die Steuereinheit in dem montierten Zustand außerhalb des Dampfaustrittsbereichs angeordnet.

Darüber hinaus wird vorgeschlagen, dass die Steuereinheit dazu vorgesehen ist, die Antriebseinheit basierend auf dem durch die Sensoreinheit erfassten aktuellen Zustandsparameter zu steuern. Hierdurch kann vorteilhaft ein Bedienkomfort weiter verbessert werden. Basierend auf dem durch die Sensoreinheit erfassten aktuellen Zustandsparameter kann beispielsweise ein automatisierter Rührvorgang bereitgestellt werden. Beispielsweise ist denkbar, dass die Steuereinheit in dem Betriebszustand der Gargeschirrvorrichtung basierend auf dem aktuellen Zustandsparameter, beispielsweise basierend auf einer aktuellen Temperatur und/oder einer Füllhöhe von Lebensmitteln in dem Lebensmittelaufnahmeraum des Gargeschirrs, eine Rührgeschwindigkeit automatisch anpasst.

Die Erfindung betrifft ferner ein Gargeschirr mit einer Gargeschirrvorrichtung nach einer der vorhergehend beschriebenen Ausgestaltungen. Ein derartiges Gargeschirr zeichnet sich insbesondere durch seine durch die Gargeschirrvorrichtung bedingten vorteilhaften Eigenschaften hinsichtlich einer Benutzerfreundlichkeit und einer Sicherheit aus.

Die Gargeschirrvorrichtung soll hierbei nicht auf die oben beschriebene Anwendung und Ausführungsformen beschränkt sein. Insbesondere kann die Gargeschirrvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung eines Gargeschirrs mit einer Gargeschirrvorrichtung, welche eine Rühreinheit, eine Befestigungseinheit und eine Antriebseinheit aufweist,
- Fig. 2: eine schematische Schnittdarstellung der Gargeschirrvorrichtung aus Figur 1 und
- Fig. 3: ein weiteres Ausführungsbeispiel eines Gargeschirrs mit einer Gargeschirrvorrichtung in einer schematischen perspektivischen Darstellung.

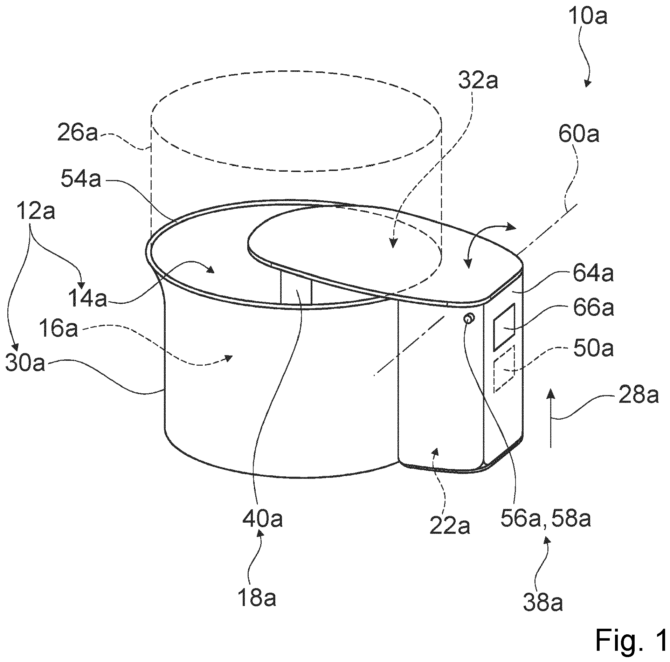

Figur 1 zeigt ein Gargeschirr 12a mit einer Gargeschirrvorrichtung 10a in einer schematischen perspektivischen Darstellung. Die Gargeschirrvorrichtung 10a ist als ein Zubehörteil für das Gargeschirr 12a ausgebildet.

Vorliegend ist das Gargeschirr 12a als ein Kochtopf ausgebildet. Das Gargeschirr 12a weist einen über eine Zugangsöffnung 14a zugänglichen Lebensmittelaufnahmeraum 16a auf. Das Gargeschirr 12a weist eine Gargeschirrwandung 30a auf, welche den Lebensmittelaufnahmeraum 16a begrenzt. Die Zugangsöffnung 14a schließt sich in einer Höhenrichtung 28a des Gargeschirrs 12a unmittelbar an den Lebensmittelaufnahmeraum 16a an und ist entlang einer Umfangsrichtung durch eine Oberkante 54a der Gargeschirrwandung 30a begrenzt.

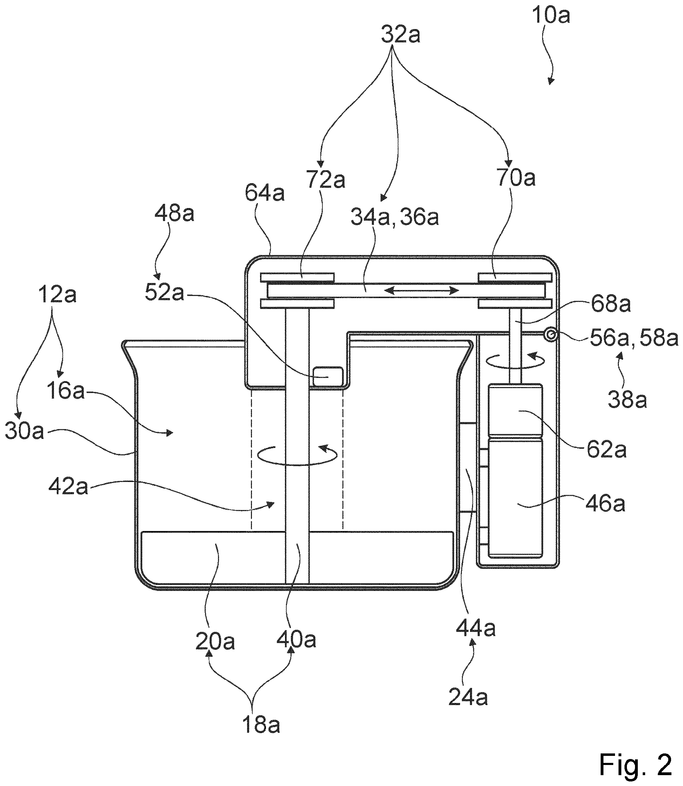

Die Gargeschirrvorrichtung 10a weist eine Rühreinheit 18a auf. Die Rühreinheit 18a umfasst zumindest ein Rührelement 20a (vgl. Figur 2). Das Rührelement 20a ist, insbesondere lösbar, mit einer Rührwelle 40a der Rühreinheit 18a verbunden.

Die Gargeschirrvorrichtung 10a umfasst eine Befestigungseinheit 24a (vgl. Figur 2) zur lösbaren Befestigung an dem Gargeschirr 12a. In der Figur 1 ist die Gargeschirrvorrichtung 10a in einem montierten Zustand gezeigt. In dem montierten Zustand ist die Gargeschirrvorrichtung 10a lösbar an dem Gargeschirr 12a befestigt und zwar mittels der Befestigungseinheit 24a.

Die Gargeschirrvorrichtung 10a weist eine Antriebseinheit 22a auf. Die Antriebseinheit 22a ist zum Antrieb des Rührelements 20a der Rühreinheit 18a vorgesehen. In einem Betriebszustand der Gargeschirrvorrichtung 10a stellt die Antriebseinheit 22a ein Antriebsmoment zum Antrieb des Rührelements 20a der Rühreinheit 18a bereit.

In dem montierten Zustand ist die Antriebseinheit 22a außerhalb eines Dampfaustrittsbereichs 26a des Lebensmittelaufnahmeraums 16a angeordnet. Der Dampfaustrittsbereich 26a weist die Form eines gedachten allgemeinen Zylinders auf. Vorliegend weist der Dampfaustrittsbereich 26a die Form eines gedachten Kreiszylinders auf, dessen Grundfläche der Zugangsöffnung 14a entspricht und welcher sich ausgehend von der Zugangsöffnung 14a in Höhenrichtung 28a senkrecht nach oben erstreckt.

Die Antriebseinheit 22a ist bezüglich der Höhenrichtung 28a neben der Gargeschirrwandung 30a des Gargeschirrs 12a anordenbar. In dem montierten Zustand ist die Antriebseinheit 22a bezüglich der Höhenrichtung 28a neben der Gargeschirrwandung 30a des Gargeschirrs 12a angeordnet.

Die Gargeschirrvorrichtung 10a weist eine Gehäuseeinheit 64a auf. Die Antriebseinheit 22a ist in der Gehäuseeinheit 64a angeordnet. Die Rührwelle 40a der Rühreinheit 18a ist drehbar an der Gehäuseeinheit 64a gelagert.

Die Gargeschirrvorrichtung 10a weist ferner eine Steuereinheit 50a auf. Die Steuereinheit 50a ist zur Steuerung der Antriebseinheit 22a vorgesehen. Die Steuereinheit 50a ist in der Gehäuseeinheit 64a angeordnet und in dem montierten Zustand außerhalb des Dampfaustrittsbereichs 26a angeordnet.

Die Gargeschirrvorrichtung 10a weist eine Bedieneinheit 66a auf. Die Bedieneinheit 66a ist an der Gehäuseeinheit 64a angeordnet und in dem montierten Zustand außerhalb des Dampfaustrittsbereichs 26a angeordnet. Vorliegend ist die Bedieneinheit 66a als ein Touchscreen ausgebildet. Die Bedieneinheit 66a ist zur Eingabe von Bedienbefehlen durch einen Benutzer sowie zur Ausgabe von Informationen an den Benutzer vorgesehen. Beispielsweise kann eine gewünschte Rührgeschwindigkeit der Rühreinheit 18a über die Bedieneinheit 66a angegeben werden und eine aktuelle Rührgeschwindigkeit über die Bedieneinheit 66a angezeigt werden.

Die Gargeschirrvorrichtung 10a weist eine Übertragungseinheit 32a auf. Die Übertragungseinheit 32a verbindet die Antriebseinheit 22a mit der in dem montierten Zustand innerhalb des Dampfaustrittsbereichs 26a angeordneten Rühreinheit 18a. Die Übertragungseinheit 32a ist zur Übertragung des Antriebsmoments von der Antriebseinheit 22a auf die Rühreinheit 18a vorgesehen. Die Übertragungseinheit 32a ist in der Gehäuseeinheit 64a angeordnet.

Die Gargeschirrvorrichtung 10a weist eine Positionierungseinheit 38a auf. Mittels der Positionierungseinheit 38a ist die Rühreinheit 18a in dem montierten Zustand in zumindest zweit Positionen relativ zur Antriebseinheit 22a positionierbar. In einer in der Figur 1 dargestellten ersten Position ist die Rührwelle 40a in dem montierten Zustand bezüglich der Höhenrichtung 28a neben der Antriebseinheit 22a positioniert und zumindest im Wesentlichen parallel zu der Gargeschirrwandung 30a des Gargeschirrs 12a ausgerichtet. Die Positionierungseinheit 38a weist zumindest ein Positionierungselement 56a auf. Vorliegend ist das Positionierungselement 56a als ein Drehgelenk 58a ausgebildet. Mittels des als Drehgelenk 58a ausgebildeten Positionierungselements 56a ist die Rühreinheit 18a in dem montierten Zustand um eine Schwenkachse 60a schwenkbar. In einer zweiten Position (nicht dargestellt) ist die Rührwelle 40a in dem montierten Zustand bezüglich der Höhenrichtung 28a oberhalb der Antriebseinheit 22a positioniert und zumindest im Wesentlichen senkrecht zu der Gargeschirrwandung 30a des Gargeschirrs 12a ausgerichtet.

Figur 2 zeigt eine schematische Schnittdarstellung des Gargeschirrs 12a mit der Gargeschirrvorrichtung 10a.

Die Befestigungseinheit 24a weist ein Befestigungselement 44a zur lösbaren Befestigung an dem Gargeschirr 12a auf. In dem vorliegenden Ausführungsbeispiel ist das Befestigungselement 44a als ein Magnet ausgebildet. Das Befestigungselement 44a ist an der Gehäuseeinheit 64a angeordnet und zu einer magnetischen Befestigung an der Gargeschirrwandung 30a des Gargeschirrs 12a vorgesehen.

Die Antriebseinheit 22a weist einen Antriebsmotor 62a auf. Der Antriebsmotor 62a ist als ein Gleichstrom-Elektromotor ausgebildet. In dem Betriebszustand der Gargeschirrvorrichtung 10a stellt der Antriebsmotor 62a das Antriebsmoment zum Antrieb der Rühreinheit 18a bereit. In dem Betriebszustand überträgt der Antriebsmotor 62a das Antriebsmoment in Form eines Drehmoments auf die Übertragungseinheit 32a.

Die Übertragungseinheit 32a weist zur Übertragung des Antriebsmoments von der Antriebseinheit 22a auf die Rühreinheit 18a einen Zugmitteltrieb 34a auf. Vorliegend ist der Zugmitteltrieb 34a als ein kraftschlüssiger Zugmitteltrieb 34a, und zwar als ein Riementrieb ausgebildet. Der Zugmitteltrieb 34a umfasst einen Antriebsriemen 36a. In dem Betriebszustand überträgt der Antriebsmotor 62a das Antriebsmoment mittels einer Antriebswelle 68a auf eine erste Antriebsrolle 70a der Übertragungseinheit 32a. Der Antriebsriemen 36a ist zwischen der ersten Antriebsrolle 70a und einer zweiten Antriebsrolle 72a der Übertragungseinheit 32a gespannt. Die zweite Antriebsrolle 72a ist mit der Rührwelle 40a der Rühreinheit 18a verbunden. Der Antriebsriemen 36a überträgt in dem Betriebszustand das durch den Antriebsmotor 62a der Antriebseinheit 22a bereitgestellte Antriebsmoment von der ersten Antriebsrolle 70a auf die zweite Antriebsrolle 72a und damit auf die Rührwelle 40a.

Die Rührwelle 40a der Rühreinheit 18a ist mittels der Positionierungseinheit 38a in einem zentralen Bereich 42a des Lebensmittelaufnahmeraums 16a positionierbar.

Die Gargeschirrvorrichtung 10a weist einen Energiespeicher 46a auf. Der Energiespeicher 46a ist zur netzunabhängigen Energieversorgung der Antriebseinheit 22a vorgesehen. In dem montierten Zustand der Gargeschirrvorrichtung 10a ist der Energiespeicher 46a außerhalb des Dampfaustrittsbereichs 26a angeordnet. Vorliegend ist der Energiespeicher 46a als ein wiederaufladbarer Energiespeicher 46a, und zwar als ein Lithium-Ionen- Akkumulator ausgebildet. Der Energiespeicher 46a ist zur netzunabhängigen Energieversorgung der Antriebseinheit 22a elektrisch leitend mit der Antriebseinheit 22a verbunden.

Die Gargeschirrvorrichtung 10a weist eine Sensoreinheit 48a auf. Die Sensoreinheit 48a ist zur Erfassung zumindest eines aktuellen Zustandsparameters des Gargeschirrs 12a vorgesehen. Bei dem aktuellen Zustandsparameter kann es sich, ohne darauf beschränkt zu sein, beispielsweise um eine aktuelle Füllhöhe des Lebensmittelaufnahmeraums 16a oder um eine aktuelle Temperatur in dem Lebensmittelaufnahmeraum 16a handeln. Die Sensoreinheit 48a weist zumindest ein Sensorelement 52a auf. Vorliegend ist das Sensorelement 52a als ein Temperatursensorelement, und zwar als ein Infratortemperatursensor ausgebildet. Das Sensorelement 52a ist in einer Wandung der Gehäuseeinheit 64a neben der Rührwelle 40a der Rühreinheit angeordnet.

Vorliegend ist die Steuereinheit 50a (vgl. Figur 1) dazu vorgesehen, die Antriebseinheit 22a basierend auf dem durch die Sensoreinheit 48a erfassten aktuellen Zustandsparameter des Gargeschirrs 12a zu steuern. Vorliegend handelt es sich bei dem aktuellen Zustandsparameter um eine aktuelle Temperatur in dem Lebensmittelaufnahmeraum 16a des Gargeschirrs 12a. Die Steuereinheit 50a kann beispielsweise dazu vorgesehen sein, bei einem Anstieg der aktuellen Temperatur in dem Lebensmittelaufnahmeraum 16a das durch die Antriebseinheit 22a bereitgestellte Antriebsmoment und damit eine Drehgeschwindigkeit der Rührwelle 40a automatisch zu erhöhen.

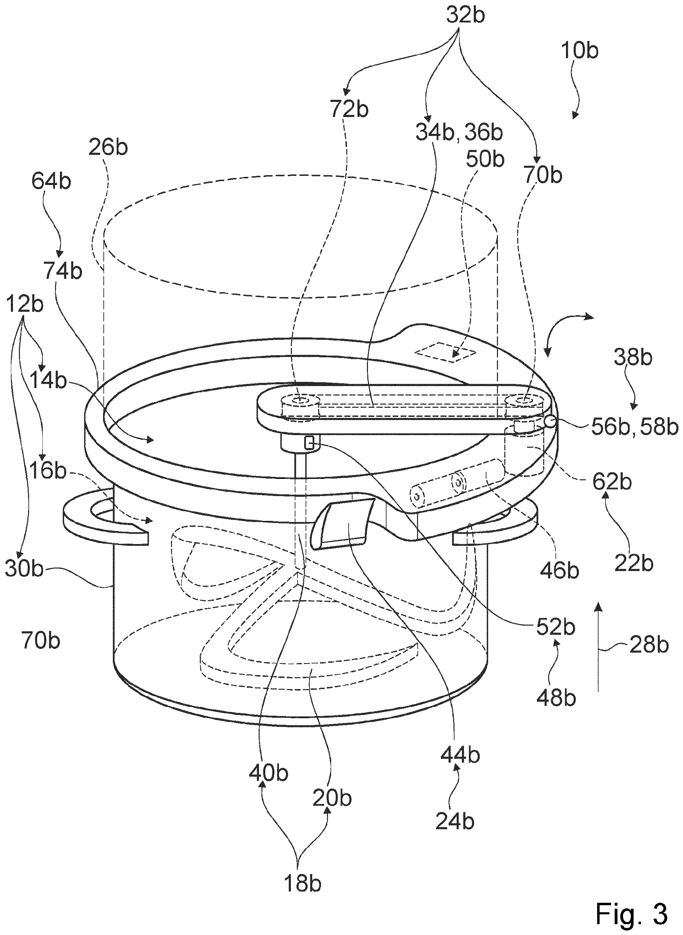

In Figur 3 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 und 2 verwiesen werden kann. Zur Unterscheidung der Ausführungsbeispiele ist der Buchstabe a in den Bezugszeichen des Ausführungsbeispiels in den Figuren 1 bis 2 durch den Buchstaben b in den Bezugszeichen des Ausführungsbeispiels der Figur 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 und 2 verwiesen werden.

Figur 3 zeigt ein weiteres Ausführungsbeispiel eines Gargeschirrs 12b mit einer Gargeschirrvorrichtung 10b in einer schematischen perspektivischen Darstellung. Die Gargeschirrvorrichtung 10b ist als ein Zubehörteil für das Gargeschirr 12b ausgebildet. Das Gargeschirr 12b weist einen über eine Zugangsöffnung 14b zugänglichen Lebensmittelaufnahmeraum 16b auf.

Die Gargeschirrvorrichtung 10b weist eine Rühreinheit 18b mit zumindest einem Rührelement 20b, eine Antriebseinheit 22b zum Antrieb des Rührelements 20b und eine Befestigungseinheit 24b zur lösbaren Befestigung an dem Gargeschirr 12b auf. In einem montierten Zustand der Gargeschirrvorrichtung 10b ist die Antriebseinheit 22b außerhalb eines Dampfaustrittsbereichs 26b des Lebensmittelaufnahmeraums 16b angeordnet.

Die Gargeschirrvorrichtung 10b unterscheidet sich von der Gargeschirrvorrichtung 10a des vorhergehenden Ausführungsbeispiels insbesondere hinsichtlich einer Ausgestaltung der Befestigungseinheit 24b sowie hinsichtlich einer Ausgestaltung einer Gehäuseeinheit 64b. Im Unterschied zu dem vorhergehenden Ausführungsbeispiel weist die Gehäuseeinheit 64b einen ringförmigen Grundkörper 74b auf.

In dem montierten Zustand ist die Gargeschirrvorrichtung 10b lösbar an dem Gargeschirr 12b befestigt, und zwar mittels der Befestigungseinheit 24b. Die Befestigungseinheit 24b weist hierzu zumindest ein Befestigungselement 44b auf. Im Unterschied zu dem vorhergehenden Ausführungsbeispiel ist das Befestigungselement 44b zur Herstellung einer form- und/oder kraftschlüssigen Verbindung mit einer Gargeschirrwandung 30b des Gargeschirrs 12b vorgesehen. Vorliegend weist die Befestigungseinheit 24b zwei Befestigungselemente 44b auf, welche auf gegenüberliegenden Seiten des ringförmigen Grundkörpers 74b angeordnet und jeweils zur Herstellung einer form- und/oder kraftschlüssigen Verbindung mit der Gargeschirrwandung 30b vorgesehen sind. In der Figur 3 ist nur eines der Befestigungselemente 44b dargestellt. Die Befestigungselemente 44b der Befestigungseinheit 24b sind als Spannelemente ausgebildet. Zur Herstellung der form- und/oder kraftschlüssigen Verbindung mit der Gargeschirrwandung 30b können die Befestigungselemente 44b entgegen einer Höhenrichtung 28b des Gargeschirrs 12b nach unten gedrückt werden, sodass der ringförmige Grundkörper 74b mit der Gargeschirrwandung 30b des Gargeschirrs 12b form- und/oder kraftschlüssig verspannt ist. Zum Lösen der form- und/oder kraftschlüssigen Verbindung mit der Gargeschirrwandung 30b können die Befestigungselemente 44b entsprechend wieder in Höhenrichtung 28b bewegt werden.

Im Unterschied zu dem vorhergehenden Ausführungsbeispiel weist das Rührelement 20b der Rühreinheit 18b eine geschwungene Form mit scharfkantigen Spitzen auf, sodass in dem Lebensmittelaufnahmeraum 16b befindliche Lebensmittel nicht nur gerührt, sondern auch zerkleinert werden können.

### Bezugszeichen

- 10: Gargeschirrvorrichtung
- 12: Gargeschirr
- 14: Zugangsöffnung
- 16: Lebensmittelaufnahmeraum
- 18: Rühreinheit
- 20: Rührelement
- 22: Antriebseinheit
- 24: Befestigungseinheit
- 26: Dampfaustrittsbereich
- 28: Höhenrichtung
- 30: Gargeschirrwandung
- 32: Übertragungseinheit
- 34: Zugmitteltrieb
- 36: Antriebsriemen
- 38: Positionierungseinheit
- 40: Rührwelle
- 42: zentraler Bereich
- 44: Befestigungselement
- 46: Energiespeicher
- 48: Sensoreinheit
- 50: Steuereinheit
- 52: Sensorelement
- 54: Oberkante
- 56: Positionierungselement
- 58: Drehgelenk
- 60: Schwenkachse
- 62: Antriebsmotor
- 64: Gehäuseeinheit
- 66: Bedieneinheit
- 68: Antriebswelle
- 70: erste Antriebsrolle
- 72: zweite Antriebsrolle
- 74: ringförmiger Grundkörper

## Patentansprüche

1. Gargeschirrvorrichtung (10a; 10b) für zumindest ein Gargeschirr (12a; 12b), welches einen über eine Zugangsöffnung (14a; 14b) zugänglichen Lebensmittelaufnahmeraum (16a; 16b) aufweist, mit zumindest einer Rühreinheit (18a; 18b), welche zumindest ein Rührelement (20a; 20b) umfasst, mit einer Antriebseinheit (22a; 22b) zum Antrieb des Rührelements (20a; 20b) innerhalb des Lebensmittelaufnahmeraums (16a; 16b) und mit einer Befestigungseinheit (24a; 24b) zur lösbaren Befestigung an dem Gargeschirr (12a; 12b), **dadurch gekennzeichnet, dass** die Antriebseinheit (22a; 22b) in einem montierten Zustand außerhalb eines Dampfaustrittsbereichs (26a; 26b) des Lebensmittelaufnahmeraums (16a; 16b) angeordnet ist.

2. Gargeschirrvorrichtung (10a; 10b) nach Anspruch 1, **dadurch gekennzeichnet, dass** die Antriebseinheit (22a; 22b) bezüglich einer Höhenrichtung (28a; 28b) neben einer Gargeschirrwandung (30a; 30b) des Gargeschirrs (12a; 12b) anordenbar ist.

3. Gargeschirrvorrichtung (10a; 10b) nach Anspruch 1 oder 2, **gekennzeichnet durch** eine Übertragungseinheit (32a; 32b), welche die Antriebseinheit (22a; 22b) mit der in dem montierten Zustand innerhalb des Dampfaustrittsbereichs (26a; 26b) angeordneten Rühreinheit (18a; 18b) verbindet und welche zur Übertragung eines Antriebsmoments von der Antriebseinheit (22a; 22b) auf die Rühreinheit (18a; 18b) einen Zugmitteltrieb (34a; 34b) aufweist.

4. Gargeschirrvorrichtung (10a; 10b) nach Anspruch 3, **dadurch gekennzeichnet, dass** der Zugmitteltrieb (34a; 34b) als ein kraftschlüssiger Zugmitteltrieb (34a; 34b), insbesondere als ein Riementrieb, ausgebildet ist.

5. Gargeschirrvorrichtung (10a; 10b) nach einem der vorhergehenden Ansprüche, **gekennzeichnet durch** eine Positionierungseinheit (38a; 38b), mittels derer die Rühreinheit (18a; 18b) in dem montierten Zustand in zumindest zwei Positionen relativ zur Antriebseinheit (22a; 22b) positionierbar ist.

6. Gargeschirrvorrichtung (10a; 10b) nach Anspruch 5, **dadurch gekennzeichnet, dass** eine Rührwelle (40a; 40b) der Rühreinheit (18a; 18b) mittels der Positionierungseinheit (38a; 38b) in einem zentralen Bereich (42a; 42b) des Lebensmittelaufnahmeraums (16a; 16b) positionierbar ist.

7. Gargeschirrvorrichtung (10b) nach einem der vorhergehenden Ansprüche, **dadurch gekennzeichnet, dass** die Befestigungseinheit (24b) zumindest ein Befestigungselement (44b) aufweist, welches zur Herstellung einer form- und/oder kraftschlüssigen Verbindung mit einer Gargeschirrwandung (30b) des Gargeschirrs (12b) vorgesehen ist.

8. Gargeschirrvorrichtung (10a; 10b) nach einem der vorhergehenden Ansprüche, **gekennzeichnet durch** einen in dem montieren Zustand außerhalb des Dampfaustrittsbereichs (26a; 26b) angeordneten Energiespeicher (46a; 46b) zur netzunabhängigen Energieversorgung der Antriebseinheit (22a; 22b).

9. Gargeschirrvorrichtung nach einem der vorhergehenden Ansprüche, **gekennzeichnet durch** eine Sensoreinheit (48a; 48b) zur Erfassung zumindest eines aktuellen Zustandsparameters des Gargeschirrs (12a; 12b).

10. Gargeschirrvorrichtung (10a; 10b) nach einem der vorhergehenden Ansprüche, **gekennzeichnet durch** eine Steuereinheit (50a; 50b) zur Steuerung der Antriebseinheit (22a; 22b).

11. Gargeschirrvorrichtung (10a; 10b) nach den Ansprüchen 9 und 10, **dadurch gekennzeichnet, dass** die Steuereinheit (50a; 50b) dazu vorgesehen ist, die Antriebseinheit (22a; 22b) basierend auf dem durch die Sensoreinheit (48a; 48b) erfassten Zustandsparameter zu steuern.

12. Gargeschirr (12a; 12b) mit einer Gargeschirrvorrichtung (10a; 10b) nach einem der vorhergehenden Ansprüche.
